Europäisches Patentamt

European Patent Office    (11) Numéro de publication: **0 001 669**

Office européen des brevets    **A1**

(12) **DEMANDE DE BREVET EUROPEEN**

(21) Numéro de dépôt: **78200254.7**    (51) Int. Cl.²: **B 62 D 13 00**

(22) Date de dépôt: **19.10.78**

(30) Priorité: **20.10.77 BE 859923**

(43) Date de publication de la demande:
**02.05.79 Bulletin 79 9**

(84) Etats contractants désignés:
**CH DE FR**

(71) Demandeur: **Société dite: EKSELSE KONSTRUKTIE WERKEN Personen Vennootschap met Beperkte Aansprakelijkheid
Kiefhoekstraat 1a
B-3588 Hechtel - Eksel(BE)**

(72) Inventeur: **Lenaerts, Gerard
Kiefhoekstraat 3
B-3588 Hechtel - Eksel(BE)**

(74) Mandataire: **Ottelohe, Jozef René
Bureau Ottelohe J.R. Postbus 3 Fruithoflaan 105
B-2600 Antwerpen (Berchem)(BE)**

(54) **Dispositif pour la direction de trains d'essieux à roues de remorques et semi-remorques.**

(57) L'invention se rapporte à un dispositif de direction pour jeux d'essieux à roues se trouvant adaptées près de l'arrière de semi-remorques et de remorques et où ces trains d'essieux sont montés chacun sur une couronne rotative qui peut pivoter par rapport à ladite remorque autour d'un axe vertical, ces couronnes rotatives subissant une rotation lorsque le véhicule prend un virage. Le dispositif consiste principalement en un élément rotatif (14) capable de pivoter autour d'un axe vertical et faisant partie de la partie avant d'une semi-remorque, en un moyen (18) pour verrouiller cet élément avec la partie fixe de l'accouplement de semi-remorque du tracteur, en au moins un cylindre hydraulique (16) appliqué entre le chassis de la semi-remorque et l'élément rotatif (14) précité, en au moins un cylindre hydraulique (8) appliqué entre au moins une des couronnes rotatives (4) sur laquelle se trouve monté un des trains d'essieux (2 - 3) et le châssis de la semi-remorque, et en au moins une conduite (19), reliant la partie avent desdits cylindres hydrauliques (8 - 16) et une conduite (20) reliant la partie arrière des cylindres hydrauliques précités (8 - 16) les unes aux autres.

Fig.1

Croydon Printing Company Ltd

- 1 -

Dispositif pour la direction de trains d'essieux à roues de remorques et semi-remorques.

L'invention se rapporte à un dispositif de direction pour jeux d'essieux à roues se trouvant adaptées près de l'arrière de semi-remorques et de remorques et où ces trains d'essieux sont montés chacun sur une couronne rotative qui peut pivoter par rapport à ladite remorque autour d'un axe vertical, ces couronnes rotatives subissant une rotation lorsque le véhicule prend un virage.

On connaît de tels dispositifs de direction où il est prévu entre les couronnes rotatives des barres d'accouplement articulées afin de transmettre mutuellement le mouvement de rotation des couronnes et ce à partir de la couronne rotative avant vers celle de l'arrière. Au moyen d'une telle transmission de mouvement on n'obtient non seulement une rotation dure des trains d'essieux, ce qui est néfaste pour les pneus, mais en outre il n'est pas possible d'appliquer un tel dispositif de direction sur semi-remorques dont la longueur est réglable.

Afin de remédier à cet inconvénient, le dispositif consiste, suivant la caractéristique la plus importante de l'invention

principalement en un élément rotatif qui fait partie de la partie avant de la semi-remorque, en un moyen pour verrouillet cet élément avec la partie rigide de l'accouplement de semi-remorque du tracteur, en au moins un cylindre hydraulique adapté entre le châssis de la semi-remorque et ledit élément rotatif, en au moins un cylindre hydraulique adapté entre au moins une de couronnes rotatives sur laquelle se trouve monté un des frains de roues et le châssis de la semi-remorque, et en une conduite qui relie entre elles les parties avant desdits cylindres hydrauliques et en une conduite qui en relie les parties arrières.

De ce fait le mouvement de rotation du train d'essieux arrière est transmis aux trains d'essieux avant, de sorte que les trains d'essieux avec roues tourneront très facilement, permettant à la semi-remorque de prendre des virages fort serrés. Ce dispositif permet en outre également de corriger au besoin le braquage des trains d'essieux et ce en intercalant dans le dispositif hydraulique une pompe à commande manuelle ou automatique. Le dispositif permet également, en utilisant en partie des conduites souples entre les cylindres hydrauliques, d'adapter la longueur des conduites à la longueur réglée des semi-remorques ou remorques à extension par coulissement.

A titre d'exemple il est donné par la suite une description plus détaillée de deux formes d'exécution possibles mais non restrictives du dispositif conforme à l'invention. Cette description se réfère aux dessins annexés dans lesquels:

la fig. 1 représente une vue en plan d'une semi-remorque à deux trains d'essieux;

la fig. 2 représente également une vue en plan d'une semi-

- 3 -                    0001669

remorque mais à trois trains d'essieux et un double dispositif de direction;

la fig. 3 représente une vue en plan schématique d'un dispositif de direction, où chaque cylindre hydraulique est raccordé à quatre conduites.

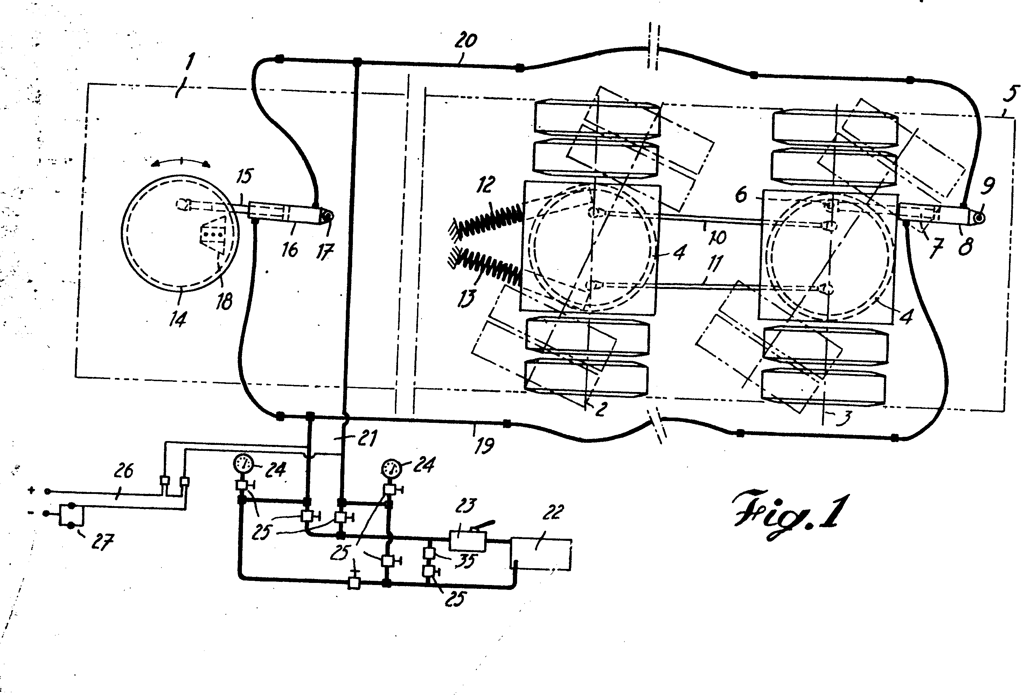

A la figure 1 il est représenté une semi-remorque 1 à deux
trains d'essieux 2 - 3. Chaque train d'essieux est monté
sur la partie pivotante d'une couronne rotative à rotule 4
qui est montée de manière rigide sur le châssis 5 de la
semi-remorque 1. La partie rotative de la couronne rotative
4 du train d'essieu arrière 3 de la semi-remorque, se trouve raccordée par l'entremise d'une rotule 6 à la bielle 7
du cylindre hydraulique 8, pourvu de deux bouchons de purge,
et qui est relié de manière articulée au moyen d'une rotule
9 au châssis 5 de la semi-remorque. Ce cylindre hydraulique
est destiné à faire tourner la partie pivotante de la couronne rotative 4, et par conséquent à régler les roues du
train d'essieux qui s'y rapporte à un angle de braquage
donné, suivant le virage parcouru par la semi-remorque. Cet
angle de braquage comportera de préférence un maximum de
35° afin d'éviter que la semi-remorque ne se renverse. Les
deux couronnes rotatives à rotule 4 des deux trains d'essieux 2 - 3, se trouvent accouplées de manière articulée
au moyen de deux barres de direction 10 - 11 et de rotules
appliquées de part et d'autre à une distance donnée du
point de pivotement des couronnes rotatives. Cet accouplement est exécuté de telle manière que les point d'articulation des barres de direction 10 - 11 se situent plus
près de l'axe de pivotement de la couronne rotative 4 arrière, que du point de pivotement de la couronne rotative 4
avant. On obtient ainsi que l'angle de braquage du train
d'essieux arrière 3 est supérieur à celui du train d'essi-

0001669

eux avant, de sorte que la torsion exercée dans la semi-remorque se trouve réduite au minimum lorsqu'on prend un virage. Il est prévu deux ressorts de compression 12 - 13 entre le châssis 5 et l'axe du train d'essieux avant 2 de la semi-remorque. Ces ressorts ramèneront toujours les trains d'essieux avec roues en position ligne droite après avoir parcouru un virage, même s'il devait se présenter une fuite dans l'installation hydraulique. A l'avant, la semi-remorque comporte également une couronne rotative à rotule 14 avec angle de rotation de 90°, dont la partie rotative de rotule est raccordée à la bielle 15 d'un cylindre hydraulique 16, qui à son tour se rattache au châssis 5 de la semi-remorque par une rotule 17. La couronne rotative 14 fait office de plateau d'appui de la semi-remorque, la partie pivotante de la couronne rotative étant pourvue d'un coin conique réglable 18 qui s'engage dans l'accouplement de semi-remorque du tracteur, de manière que suivant l'angle que présentera le tracteur par rapport à la semi-remorque lors du parcours d'un virage, la partie pivotante de la couronne rotative 14 subira une rotation proportionnelle. Les cylindres hydrauliques 8 - 16 ont leurs parties avant qui sont en communication par l'entremise de la conduite 19 et leurs parties arrières par l'entremise de la conduite 20. Ces deux conduites seront de préférence réalisées partiellement en une matière souple de manière à pouvoir en adapter la longueur à la longueur à laquelle est réglée la semi-remorque à coulisse. Cette partie souple des conduites pourra alors soit être enroulée sur des tambours, soit être repliée en forme de boucles et attachée sous la semi-remorque. Chaque conduite est reliée par l'entremise d'un réseau de conduites 21 à un réservoir d'huile 22. Ce réseau de conduites comporte également une pompe à main 23, une série de manomètres 24, pour la vérification des réglages de pression initiales, et un jeu de vannes d'arrêt 25 qui seront fermées dès que la pression initiale correcte aura été obtenue. On pourra prévoir une soupape à surpression 35 pour éviter que la pression développée par la pompe à main 23 ne devienne trop forte, cette soupape pouvant par exemple être réglée à 40 ou 50 kg/cm$^2$. Il est également prévu sur ce réseau de conduites un circuit électrique 26 comportant une ou plusieurs lampes témoin 27 qui peuvent être montées sur le tableau de bord du tracteur ou sur la paroi avant de la semi-remorque, afin de signaler toute fuite dans le système hydraulique ou tout dérangement de la direction. Lorsque par une cause quelconque, les trains d'essieux 2 - 3 avec roues ne se mettent plus en ligne droite, on pourra les ramener dans la position correcte à l'aide de la pompe à main 23 et en ouvrant un nombre de vannes 25 et en fermant un nombre le vannes 25. De préférence les axes des trains d'essieux 2 - 3 seront installés quelque peu à l'arrière de l'axe de pivotement des couronnes rotatives à rotule 4 afin de rendre la direction plus facile et d'éviter les vibrations en roulant.

Lorsque le tracteur avec sa semi-remorque prennent un virage et que le tracteur adopte un angle donné par rapport à la semi-remorque, la partie mobile de la couronne rotative 14 de la semi-remorque, qui est rigidement reliée à l'accouplement de semi-remorque du tracteur, subira une rotation. Il s'ensuit que la bielle 15 du cylindre hydraulique 16 sera déplacé, de manière que l'huile dans le cylindre hydraulique 8 qui coopère avec le train d'essieux 3 de la semi-remorque déplacera la bielle 7 de celui-ci. De cette manière la couronne rotative 4 du train d'essieux arrière 3 tournera toujours dans le sens opposé au sens de rotation de la couronne rotative 14 qui forme plateau d'appui de semi-remorque du tracteur. Le pivotement de la couronne rotative arrière 4 de la semi-remorque est alors transmi par les barres de direction 10 - 11 à la couronne rotative 4 du train d'essieux avant 2, alors que l'angle de déplacement de ce train d'essieux est inférieur à celui du train d'essieux arrière,
comme on l'a déjà exposé.

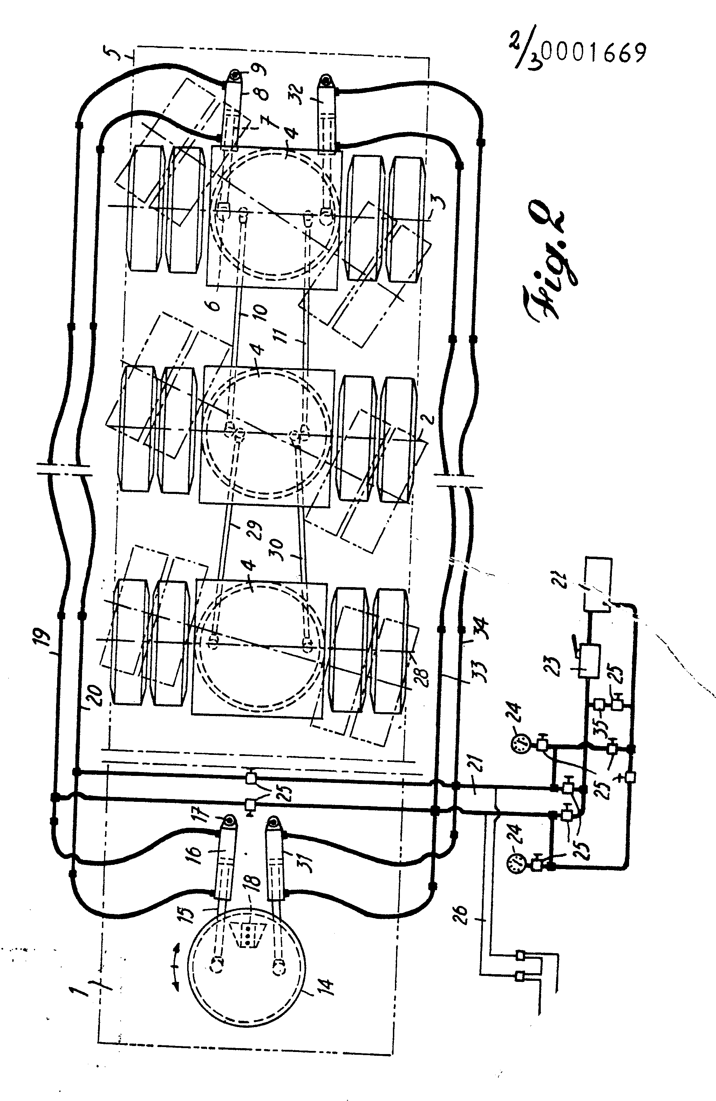

La semi-remorque avec système de direction hydraulique illustrée à la figure 2 fonctionne exactement de la même manière que celle décrite ci-avant. On utilise cependant ici
trois trains d'essieux 2 - 3 - 28 alors que les barres de
direction 10 - 11 - 29 - 30 sont appliquées de telle manière entre les couronnes rotatives 4 que le train d'essieux
avant 28 adopte le plus petit angle de braquage, alors que
le train d'essieux arrière 3 adopte l'angle de braquage le
plus grand. Les ressorts de compression 12 - 13 de la semi-
remorque décrite en premier lieu ont cependant été supprimés dans ce cas et remplacés par un système de direction
hydraulique complémentaire se composant de deux cylindres
hydrauliques 31 - 32 avec conduites 33 - 34 qui sont appliqués et raccordés de la même manière que ceux du système
de direction hydraulique décrit en premier lieu. Les deux
systèmes de direction hydraulique fonctionnent indépendamment l'un de l'autre. En cas de bris d'une conduite ou de
fuites dans un des cylindres d'un des systèmes de direction,
l'autre système de direction continue à fonctionner sans
aléas, de sorte que la direction reste assurée en toute sécurité.

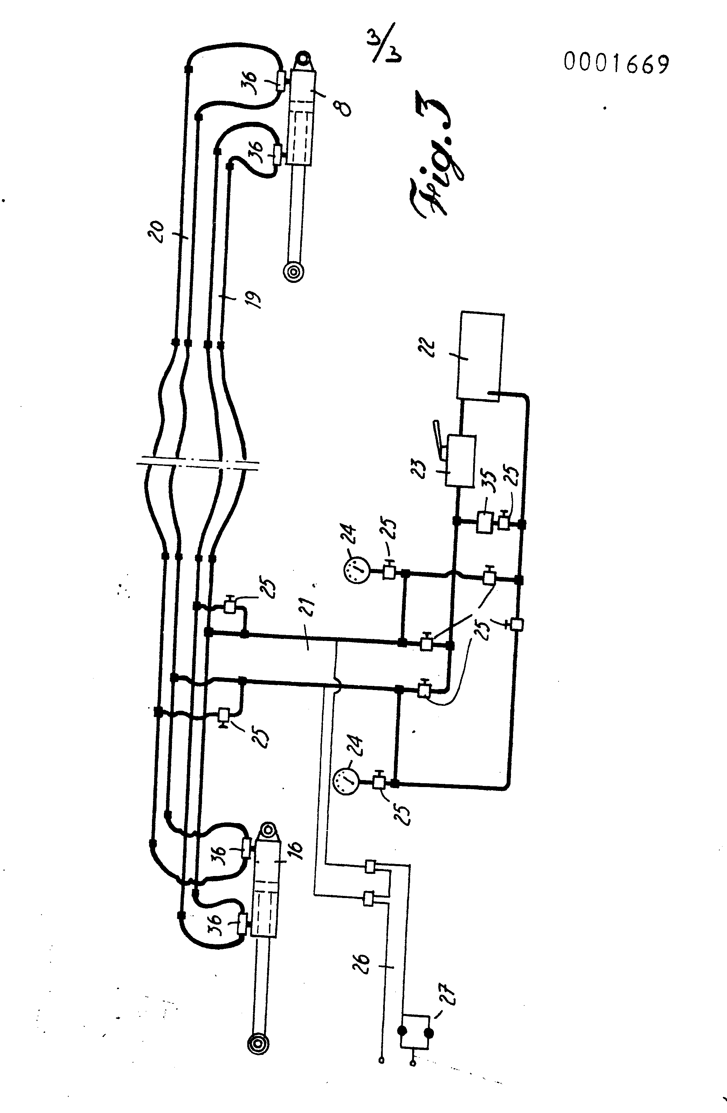

Il est également possible, comme illustré à la figure 3, de
raccorder les parties avant et arrière de chaque cylindre
8 - 16 au moyen de conduites doubles 19 - 20 par l'entremise d'une soupape de rupture de flexible 36. Lorsqu'il se
produit une rupture dans une conduite, la soupape 36 sur
laquelle est raccordée ladite conduite se fermera dans le
sens de la conduite brisée, tandis que l'autre conduite
reste en service, de sorte que le fonctionnement normal du système reste garanti.

Il est bien évident que l'invention est d'application sur une semi-remorque avec un nombre quelconque de trains d'essieux, que le nombre de cylindres hydrauliques peut être choisi en fonction du but poursuivi, que le réseau de conduites avec pompe, réservoir d'huile, vannes et manomètres qui se trouve raccordé sur les conduites des cylindres hydrauliques, pourrait être complété ou remplacé par n'importe quel autre système qui poursuit le même but et que la disposition relative des composants des dispositifs décrits ci-dessus pourra varier à condition de ne pas sortir du cadre de l'invention.

0001669

REVENDICATIONS

————————

1.- Dispositif pour la direction de trains d'essieux avec roues, de semi-remorques ou remorques, lesdits trains d'essieux se trouvant montés sur une couronne rotative pouvant pivoter autour d'un axe vertical, lesdites couronnes rotatives étant reliés entre elles par des barres de direction à articulation, caractérisé par le fait qu'il consiste principalement en un élément rotatif (14) capable de pivoter autour d'un axe vertical et faisant partie de la partie avant d'une semi-remorque, en un moyen (18) pour verrouiller cet élément avec la partie fixe de l'accouplement de semi-remorque du tracteur, en au moins un cylindre hydraulique (16) appliqué entre le châssis de la semi-remorque et l'élément rotatif (14) précité, en au moins un cylindre hydraulique (8) appliqué entre au moins une des couronnes rotatives (4) sur laquelle se trouve monté un des trains d'essieux (2 - 3) et le châssis de la semi-remorque, et en au moins une conduite (19) reliant la partie avant desdits cylindres hydrauliques (8 - 16) et une conduite (20) reliant la partie arrière des cylindres hydrauliques précités (8 - 16) les unes aux autres.

2.- Dispositif selon la revendication 1, caractérisé par le fait que l'élément qui peut pivoter autour d'un axe vertical consiste en une couronne rotative à rotule (14).

3.- Dispositif selon la revendication 2, caractérisé par le fait que la couronne rotative à rotule (14) de la semi-remorque fait office de plateau d'appui de semi-remorque pour celle-ci et est pourvue d'un coin conique réglable (18) qui s'engage dans l'accouplement de semi-remorque du tracteur.

4.- Dispositif selon la revendication 1, caractérisé par le fait qu'il est prévu entre au moins un train d'essieux (2) et le châssis de la semi-remorque, et de part et d'autre de l'axe de pivotement du train d'essieux précité, un ressort de compression (12 - 13), ressorts qui maintiennent le train d'essieux (2) en position ligne droite.

5.- Dispositif selon la revendication 1, caractérisé par le fait que la couronne rotative à rotule avant (14) de la semi-remorque et qui fait office de plateau d'appui, ainsi que la couronne rotative (4) du train d'essieux arrière (3) de la semi-remorque, coopèrent chacun avec deux cylindres hydrauliques (16 - 31 et 8 - 32) appliqués de part et d'autre de l'axe de pivotement vertical des couronnes rotatives.

6.- Dispositif selon la revendication 1, caractérisé par le fait que les conduites (19 - 20 et 33 - 34) entre les cylindres hydrauliques, se composent au moins partiellement d'une matière souple, de manière à pouvoir en adapter la longueur à la longueur réglée d'une semi-remorque à coulisse.

7.- Dispositif conforme à la revendication 1, caractérisé par le fait qu'il y a, raccordé aux conduites (19 - 20 et 33 - 34) des cylindres hydraulique, un réservoir d'huile (22), une pompe à main (23), des vannes d'arrêt (25), une soupape de surpression (35) et des manomètres (24), dans le but de pouvoir régler la position des trains d'essieux avec roues (2 - 3 - 28)

8.- Dispositif selon la revendication 1, caractérisé par le fait qu'il se trouve raccordé sur les conduites (19 - 20 et 33 - 34) des cylindres hydrauliques, un circuit électrique (26) comportant au moins une lampe témoin (27).

9.- Dispositif selon la revendication 1, caractérisé par le fait que les côtés avant, respectivement arrières, de chaque

0001669

cylindre hydraulique se trouvent raccordés par l'entremise d'une soupape de rupture de flexible (36) à deux conduites fonctionnant indépendamment l'une de l'autre, l'une des deux étant mise hors service par ladite soupe en cas de rupture.

*Fig.1*

0001669

Fig.2

Fig.3

3/3

0001669

**Office européen des brevets**

# RAPPORT DE RECHERCHE EUROPEENNE

Numéro de la demande

EP 78 200 254.7

| Catégorie | Citation du document avec indication, en cas de besoin, des parties pertinentes | Revendication concernée | CLASSEMENT DE LA DEMANDE (Int. Cl.²) |
|---|---|---|---|
| | **DOCUMENTS CONSIDERES COMME PERTINENTS** | | |
| - | DE - A - 2 460 186 (HUTTNER) <br> * page 5, lignes 2 à 25; fig. 2,3 * | 1 | B 62 D 13/00 |
| | -- | | |
| - | DE - A - 1 755 368 (BERGISCHE ACHSEN-FABRIK) <br> * page 8, lignes 10 à 16; page 9, lignes 8 à 15; fig. 2, 3 * | 1,2 <br> 3 | |
| | -- | | **DOMAINES TECHNIQUES RECHERCHES (Int. Cl.²)** |
| - | US - A - 2 174 493 (L.H. VANDERWERF) <br> * page 1, colonne de droite, lignes 24 à 26; fig. 1, 2 * | 1,4, <br> 5,7 | B 62 D 13/00 <br> B 62 D 15/00 |
| | -- | | |
| - | FR - A - 1 363 252 (OFFICINE MECCANICHE MARTINO CARELLO) <br> * page 3, colonne de droite, ligne 19, à page 4, colonne de gauche, ligne 16 * | 1,4, <br> 6,7 | |
| | -- | | **CATEGORIE DES DOCUMENTS CITES** |
| - | DE - A - 2 200 739 (WARSTEINER ACHSENFABRIK) <br> * page 7, ligne 29 à page 8, ligne 3; fig. 1, 5 * | 1,7 <br> 8 | X: particulièrement pertinent <br> A: arrière-plan technologique <br> O: divulgation non-écrite <br> P: document intercalaire <br> T: théorie ou principe à la base de l'invention <br> E: demande faisant interféren.. <br> D: document cité dans la demande <br> L: document cité pour raisons |
| | ---- | | |
| | | | &: membre de le document .. |

X Le présent rapport de recherche a été établi pour toutes les revendications

| Lieu de la recherche | Date d'achèvement de la recherche | Examinateur |
|---|---|---|
| Berlin | 11.01.1979 | |

OEB Form 1503.1 06.78